# EUROPEAN PATENT APPLICATION

(11) **EP 2 189 263 A1**
(43) Date of publication of application: **26.05.2010**
(21) Application number: 08018553.1
(22) Date of filing: 23.10.2008
(51) Int. Cl.: B29B 15/12

(54) **Vacuum-free impregnation plant**

(71) Applicant: Per Aarsleff A/S, 8230 Abyhoj (DK)
(72) Inventor: The designation of the inventor has not yet been filed
(74) Representative: Nielsen, Henrik Sten

(57) **Abstract**

The present invention relates to a method and a system for impregnating a tubular liner (46) having a fibrous inner layer and a fluid-impermeable outer layer.
The method is carried out by means of a conveyor system (10) defining a conveying path monotonously descending from a fourth position via a third and a second position to a first position. At the first position, a resin injector (18) is located. Along the conveying path, one or more constrictions are provided for allowing the liner (46) to assume a flat configuration in which the fibrous inner layer of the liner is contacting an opposite part of the fibrous inner layer of the liner.
The liner (46) is positioned on the conveyor system (10), extending through the conveying path and the one or more constrictions (A,B,C,D). The liner (46) defines a supply zone extending inside the liner between the first position and the one or more constrictions and defines an impregnation zone extending inside the liner between the one or more constrictions and the fourth position. The supply zone is filled with resin by using the resin injector (18), and the resin is allowed to advance in the impregnation zone in a direction opposite the conveying direction of the liner and to reach a steady state position at the fourth position for subjecting the liner (46) to an elevated impregnation pressure between the second and third positions caused by the height difference between the first and second position and the third and fourth position.

## Description

The present invention relates to a method and a system for impregnating a liner.

The lining technology is well known in the art of pipeline renovation. Most pipelines, including gas pipelines, water pipelines, sewer pipelines etc. may be repaired by using the lining technology. The lining technology involves introducing a lining tube, which further on will be referred to as a liner, into the faulty pipeline such that the inner walls of the pipeline are completely covered by the liner. The liner may be used to repair faults such as leakage by sealing the interior of the pipeline to the walls of the pipeline. The pipelines may have any orientation, such as e.g. vertical or horizontal. Further, the location of the pipeline may e.g. either be below ground or above ground, indoor or outdoor, in private buildings or in industrial environments. The liner may be installed in the pipeline by introducing the resin-impregnated liner into the pipeline and causing the liner to contact the inner surface of the pipeline. Typically, water, steam or pressurized gas is used for introducing the liner into the pipeline.

The liner is preferably made of a soft and flexible material, which Is easy to fold and transport to the installation site and which may be inserted into the pipeline system from the outside through e.g. a manhole or the like. The liner typically constitutes at least two overlayered tubes of different material, namely an inner tube of fibrous material and an outer tube of fluid-impermeable foil material. The liner is typically made by placing a rectangular and elongated piece of the fibrous material on top of a similar piece of the foil material, forming a tube with the fibrous material on the inside and the foil material on the outside and stitching the opposite long edges together. The foil material may be a flexible plastic material. The fibrous material may be a woven or non-woven material and may e.g. be of any of the following types: glass, carbon, aramid, polyester, polyacrylonitrile, mineral, viscose, polyamide, polyacrylic or natural fibres or a combination of the above. The fibrous material is impregnated with a resin, such as styrene/polyester or styrene-free polyester, styrene/vinylester or styrene-free vinylester, vinylester urethane, furan, phenol, water glass, epoxy, methacrylate, isocyanate or the like.

When the liner is put in place inside the pipeline system it should be hardened to achieve stability and fluid/pressure tightness. The resin should therefore be curable, e.g. by application of heat or radiation, for an irreversible transition from a soft and flexible state into a hardened state. An example of a liner, which may be used for the above purpose, may be found in EP 1 920 913. The fibrous material may be e.g. a glass fibre material or felt material, which is flexible and at the same time may hold a large quantity of resin. The material should exhibit affinity to the resin for allowing the resin to soak the liner completely.

Two different concepts exist for impregnating the liner. The first concept involves impregnating the liner in a non-inverted state, i.e. orienting the fibrous layer inside the fluid-impermeable layer. The second concept involves impregnating the liner in an inverted state, i.e. orienting the fibrous layer outside the fluid-impermeable layer. The impregnation of the liner may be simplified by using the second concept, i.e. orienting the fibrous layer towards the outside, since the resin may then be applied from the outside. An example of an impregnation technology according to the second concept may be found in the above-mentioned EP 1 920 913. The second concept has the drawback that the liner may become difficult to transport due to the impregnated and sticky outer surface. Typically, a layer of thin film must be applied on top of the impregnated fibres to avoid any contamination of resin during transport to the installation site.

The first concept involves having the fibrous layer on the inside and the fluid-impermeable layer on the outside. The fluid-impermeable layer thus acts as a barrier and protects the impregnated fibres during transportation and storage. Consequently, there is no need for providing an extra foil layer, even though such foil layer may optionally be provided inside the liner. A typical impregnation method well known in the state of the art involves placing an amount of liner on a flat surface such as a conveyor or the like and attaching a resin source to the open end of the liner. By introducing a suction source such as a vacuum pump to the liner downstream in relation to the resin source the resin may be sucked into the liner and propagate downstream. The suction source acts to provide an impregnation pressure for the resin and completely soak the fibrous material. Additionally, some of the air trapped inside the fibrous layer will be removed and sucked away by the suction source. However, due to leakages in the non-impregnated liner, pressure losses will occur in the liner. Therefore, the suction source typically may have to be placed in close proximity to the resin source. For a long liner a plurality of suction sources may be required and several small holes must be made in the liner for the purpose of attaching the suction source.

The resin is thus propelled by the pressure difference in the liner and at the same time the liner is relieved of some of the residual air inside the fibrous layer. Air bubbles may remain after curing and constitute voids in the installed liner, which may later produce cracks and other malfunctions of the liner. Several technologies exist for impregnating a liner according to the above concept. One example of an impregnation device relying on a suction source for removing residual air and for impregnating the liner is described in US 5 846 602, which shows an impregnation plant having a resin injector and a nip pressing the liner into a compressed state. The liner is provided from a roll located opposite the nip and put under low pressure by a vacuum pump. When the resin propagates through the nip by the suction force of the vacuum pump, the roll supplies more liner and thus a continuous impregnation may be performed. The vacuum pump is necessary to degas the liner and for the resin to propagate into the liner.

The resin is a viscous fluid, which propagates relatively slowly through the liner. For the liner to be impregnated and to avoid voids, the pressure inside the liner may typically be as low as 0.4 atm. It has been found that by applying such low pressure to the liner, the fibres within the liner may irreversibly contract and even break. Contracted and broken fibres will significantly reduce the ability of the fibres to accommodate resin. At the same time 0.4 atm is often not sufficient to degas the liner enough to completely avoid voids, thus to improve the impregnation quality an even lower pressure would be needed, which would compress the liner even further, and consequently cause more voids due to the broken fibres. A low pressure is difficult to maintain in the liner, which is not entirely pressure-proof since it is typically stitched together. There is consequently a need for impregnation technologies ensuring a high impregnation pressure for achieving a good void-free impregnation, which eliminates the use of sub-atmospheric pressures completely, since the use of sub-atmospheric pressure inside the liner may cause voids in the liner in the form of damaged fibres. It is therefore an object of the present invention to provide a method and a system for impregnating a liner without using sub-atmospheric pressures.

The above need and the above object together with numerous other needs and objects which will be evident from the below detailed description are according to a first aspect of the present invention obtained by a method of impregnating a tubular liner with a resin, the liner having a fibrous inner layer and a fluid-impermeable outer layer, the method comprising:
providing a conveyor system comprising a first conveyor monotonously descending from a first position to a second position downstream and below the first position, a second conveyor extending from the second position to a third position downstream and substantially level with the second position, and a third conveyor monotonously ascending from the third position to a fourth position downstream and substantially level with the first position, the conveyor system defining a conveying path defining a conveying direction from the fourth position via the third and second positions to the first position,
providing one or more constrictions located along the conveying path for allowing the liner to assume a flat configuration in which the fibrous inner layer of the liner is contacting an opposite part of the fibrous inner layer of the liner,
providing a resin injector located at the first position,
positioning the liner on the conveyor system extending through the conveying path and the constriction, the liner defining a supply zone extending inside the liner between the first position and the constriction and an impregnation zone extending inside the liner between the constriction and the fourth position,
filling the supply zone with resin by using the resin injector and allowing the resin to advance in the impregnation zone in a direction opposite the conveying direction and allowing the resin to reach a steady state position at the fourth position for subjecting the liner to an elevated impregnation pressure between the second and third positions caused by the height difference between positions 1 and 2 and positions 3 and 4, and
conveying the liner in the conveying direction.

In the present context it has been surprisingly found that a sufficient impregnation pressure may be achieved by applying a sufficiently high resin overpressure within the liner. By placing the liner on a sloped conveyor and supplying resin such that a resin column is achieved within the liner, the pressure at the bottom of the resin column will be sufficient for a void-free impregnation if the resin column is sufficiently high. Prior experience has shown that the previously used suction source should be able to decrease the pressure to at least 0.5 atm absolute pressure, i.e. half the atmospheric pressure, for a homogeneous impregnation of a typical liner and for the resin to flow into the liner and replace the air inside the fibrous layer of the liner, It is therefore contemplated that a pressure difference of about 0.5 atm is required for the purpose of impregnation of a typical liner. Since the pressure should not be lower than 1 atm to avoid compression, an overpressure of at least 0.5 atm is required to accomplish a homogeneous impregnation, i.e. sufficient impregnation pressure and air and resin flow within the liner. Such pressures may be achieved by having a resin pillar of about 4 m, provided the specific density of the resin is about 1.2 kg/litre.

Since an overpressure is used, the liner will not be compressed or broken, thus eliminating the risk of voids. The resin column inside the liner will cause the liner to assume a tubular shape due to the downward increasing pressure in the resin column. The constriction should be designed to merely cause the liner to form a flat shape and avoid the otherwise tubular shape of the liner. By causing the liner to form a flat shape, the resin will flow within the fibrous layer. The constriction should not act as a nip to block the flow of resin by squeezing, since squeezing will damage the fibrous material. The constriction should also prevent excessive resin to be stored between the second and third position and for excessive resin to be propelled towards the first position when the liner is conveyed.

The resin injector may be inserted into the open end of the liner or alternatively, in case of a long liner, be inserted through a hole in the fluid-impermeable outer layer of the liner. If the resin injector is inserted through a hole in the fluid-impermeable outer layer, the fluid-impermeable properties of the outer layer must be restored after injection of resin and before conveying by applying a patch or the like over the hole. The first, second and third conveyors may be of several different types, such as a conveyer belt, a plurality of rollers or the like. The conveyors may be motorized for simplifying the conveying and avoiding stretching the liner excessively. The first conveyor should be monotonously descending, i.e. there should be no ascending parts between the first and second position. Likewise, the third conveyor should be monotonously ascending, i.e. there should be no descending parts between the third and fourth position. Non-monotonous first and third conveyors may lead to air bubbles forming within the liner at the non-monotone portions of the first and third conveyors, i.e. at any point where a local height maximum is reached, the air bubbles cannot escape.

When the resin supply zone is filled with resin, the resin will slowly propagate towards the fourth position. The fourth position may have a slightly lower resin level than the first position due to pressure losses and flow resistance. As the resin propagates, the resin will push the remaining air out of the liner at the fourth position. The high impregnation pressure between the second and third position will cause any remaining air pockets or bubbles within the fibrous layer to collapse.

When the resin has reached the fourth position, a steady state is achieved. The second and third positions constitute effective degassing zones, where gas bubbles subjected to high pressure are ejected and may leave the resin towards the first and fourth position, respectively. The above is in distinct contrast to the low pressure impregnation technologies according to the prior art relying on low pressure sources for impregnation, since the only option for reducing the resin propagation velocity in the low pressure impregnation technologies using low pressure sources is to increase the pressure, which unavoidably reduces the degassing and impregnation quality, i.e. the degassing and impregnation quality is coupled with impregnation velocity. According to the present invention the resin propagation may be stopped while the impregnation pressure and degassing continues. The steady state position may be kept for a specific time period, such as 30 seconds, 1 minute, 2 minutes, 5 minutes, 10 minutes or even longer, to ensure that the liner is sufficiently impregnated and degassed. The liner may subsequently be conveyed to the first position and packaged and stored prior to transportation to an installation site. While conveying the liner through the constriction, any residual resin will be prevented from leaving the impregnation zone. The impregnated liner will thus return through the supply zone.

According to a further embodiment of the first aspect according to the present invention, the constriction comprises a bend or alternatively a pair of oppositely facing rollers or yet alternatively a pair of oppositely facing conveyors. By using a bend a smooth transition between the sloped first conveyer and the second conveyer may be achieved. A smooth transition will cause significantly less bending to the liner and therefore cause less damage to the fibrous material. Alternatively, rollers will reduce the friction during contraction of the liner. To optimize the amount of required resin, the liner preferably assumes the flat configuration a substantial distance along the conveying path. This may be achieved by constricting the liner between two conveyors, such as between a top conveyor and the first and/or second and/or third conveyor.

According to a further embodiment of the first aspect according to the present invention, the constriction is located at the first position and/or at the second position and/or at the third position and/or at the fourth position. Additional constrictions are preferably positioned at the above mentioned positions for keeping the liner in a flat configuration for reducing the amount of needed resin.

According to a further embodiment of the first aspect according to the present invention, the constriction comprises a plurality of constrictions along the conveying path for causing the liner to assume a flat configuration along the conveying path. Preferably, the liner is kept in the flat configuration along the whole conveying path. This will minimize the use of resin and avoid any large resin volumes inside the liner

According to a further embodiment of the first aspect according to the present invention, the second conveyor is tilted in relation to the horizontal plane. A tilted second conveyor will allow the full length of the second conveyor to be effective degassing zones since the air bubbles may move in an upward direction toward the first and fourth position via the second and third position, respectively. A perfectly horizontal second conveyor will trap the gas bubbles between the second and third position and only allow degassing at the second and third position.

According to a further embodiment of the first aspect according to the present invention, the third conveyor comprises a trolley for varying the distance between the second and third position. By varying the distance between the second and third position, a long liner may be impregnated and degassed piece by piece. The trolley may at first assume a position close to the second position such that the distance between the second position and the third position is minimized for a first piece of the liner to be impregnated and degassed at the effective impregnation zones at the above mentioned second position and third position. Subsequently, the trolley may be moving in a direction away from the second position to continuously impregnate and degas the liner at the third position. This way the impregnation process may be controlled accurately, since the trolley may be stopped and a pause may be applied to ensure sufficient impregnation. The trolley may even be moving a specific distance in a direction towards the second position and then continue moving in a direction away from the second position.

According to a further embodiment of the first aspect according to the present invention, the trolley comprises a sensor for automatically controlling the movement of the trolley. The sensor may be employed to monitor the distance the resin has protruded inside the liner. When the resin has reached the fourth position, the trolley may move automatically a distance away from the second position for a further piece of the liner to be impregnated, or alternatively the trolley is moved for a specific time period after the fourth position has been reached by the resin to allow the resin some time to degas the liner.

According to a further embodiment of the first aspect according to the present invention, the first conveyor and/or the second conveyor and/or the third conveyor comprise a vibration device for allowing gas bubbles to escape. To remove any residual gas bubbles trapped inside the fibrous layer a vibrating motion may be applied to the liner so that gas bubbles may escape towards the first and fourth positions and so that the liner may be homogeneously impregnated. The vibration device may be any device causing the liner to oscillate. The oscillation may be applied to one or more of the conveyors and in any direction such as an upward-downward direction, or upstream-downstream direction, or any sideward direction or a combination of the above. The vibration device may operate with variable amplitude and frequency, or alternatively the amplitude and frequency may be fixed.

According to a further embodiment of the first aspect according to the present invention, the resin injector is extendable into the liner in a direction from the first position to the second position. By providing resin from the first position only, gas bubbles may be trapped inside the supply zone. This may be avoided by extending the resin injector into the supply zone of the liner to the second position so that the supply zone may be homogeneously filled with resin from the bottom part of the supply zone near the constriction and upwards towards the first position. As the resin level rises in the supply zone, the resin injector may be retracted to the first position. The resin injector may be a hose, or alternatively a metal injector. A metal injector is preferred if the injector should be able to penetrate the liner.

According to a further embodiment of the first aspect according to the present invention, the conveyer system comprises a liner supply for supplying additional liner at the fourth position or alternatively at the first position. The liner may preferably be supplied from a roll or stack near the fourth position, such that the liner may be conveyed from the fourth position towards the first position. The liner supply may either be fixedly attached to the third conveyer at the fourth position, or alternatively positioned further downstream in relation to the fourth position. Alternatively, the liner may be produced near the fourth position and conveyed to the fourth position for being able to produce pieces having any length, or alternatively for a continuous production of liner, a so-called endless liner production. Alternatively, the liner may be supplied from a supply near the first position, i.e. in a first step the liner is conveyed from the first position to the fourth position in an opposite conveying direction, and subsequently in a second step the liner is conveyed in the conveying direction towards the first position.

According to a further embodiment of the first aspect according to the present invention, the first and fourth positions, respectively, are located 1-15 m above the second and third position, respectively, preferably 2-8 m, more preferably 3-6 m and most preferably 4 m, or alternatively 2-4 m, or yet alternatively 4-6 m. The conveyor system should have sufficient height for the resin column in the supply zone to achieve a suitable impregnation pressure in the impregnation zone. Theoretically, a resin column of 4 m would yield an impregnation pressure of around 1.5 atm absolute pressure in the impregnation zone (by assuming 1 atm absolute ambient pressure).

According to a further embodiment of the first aspect according to the present invention, the second conveyer is extending 1-300 m, preferably 10-60 m and more preferably 30 m, or alternatively 10-20 m, 20-30 m, 30-40 m, 40-50 m or 50-60 m. A longer second conveyor would yield a longer effective impregnation zone. The third conveyor is not considered an effective impregnation zone, since the pressure will fall as the third conveyor is elevated from the third position towards the fourth position.

According to a further embodiment of the first aspect according to the present invention, the constriction is adjustable for allowing different liner sizes. The constriction is preferably adjustable to be able to accommodate different liners having different thicknesses of the fibrous layer. Since the liner should assume a flat configuration and it is not advisable to crush the liner or to have a tubular shape of the liner, preferably the constriction may be adjustable so that differently sized liners may assume the flat configuration.

According to a further embodiment of the first aspect according to the present invention, the third conveyer is placed on top of the second conveyor. In a particular embodiment, the third conveyor is placed movably on the second conveyer. This way, the effective length of the second conveyer extends as the third conveyer moves away from the second position, and vice versa.

According to a further embodiment of the first aspect according to the present invention, the resin level in the supply zone is monitored by IR. IR (infrared) monitoring may be used to monitor the resin level in the supply zone from the outside.

The above need and the above object together with numerous other needs and objects which will be evident from the below detailed description are according to a second aspect of the present invention obtained by an impregnation plant for impregnating a tubular liner with a resin, the liner having a fibrous inner layer and a fluid-impermeable outer layer, the impregnation plant comprising:
a conveyor system comprising a first conveyor monotonously descending from a first position to a second position downstream and below the first position, a second conveyor extending from the second position to a third position downstream and substantially level with the second position, and a third conveyor monotonously ascending from the third position to a fourth position downstream and substantially level with the first position, the conveyor system defining a conveying path defining a conveying direction from the fourth position via the third and second positions to the first position for positioning the liner on the conveyor system between the first position and the fourth position and extending through the constriction and conveying the liner in the conveying direction, the liner defining a supply zone extending inside the liner between the first position and the constriction, and an impregnation zone extending inside the liner between the constriction and the fourth position
one or more constrictions located along the conveying path for allowing the liner to assume a flat configuration in which the fibrous inner layer of the liner is contacting an opposite part of the fibrous inner layer of the liner, and
a resin injector located at the first position for filling the supply zone with resin by using the resin injector and allowing the resin to advance in the impregnation zone in a direction opposite the conveying direction and allowing the resin to reach a steady state position at the fourth position for subjecting the liner to an elevated impregnation pressure between the second and third position caused by the height difference between the first and second position and between the third and fourth position.

The above impregnation plant according to the second aspect of the present invention is preferably used together with the above methods according to the first aspect of the present invention. It is further evident that the above impregnation plant according to the second aspect of the present invention may comprise any of the features mentioned above in connection with the first aspect of the present invention.

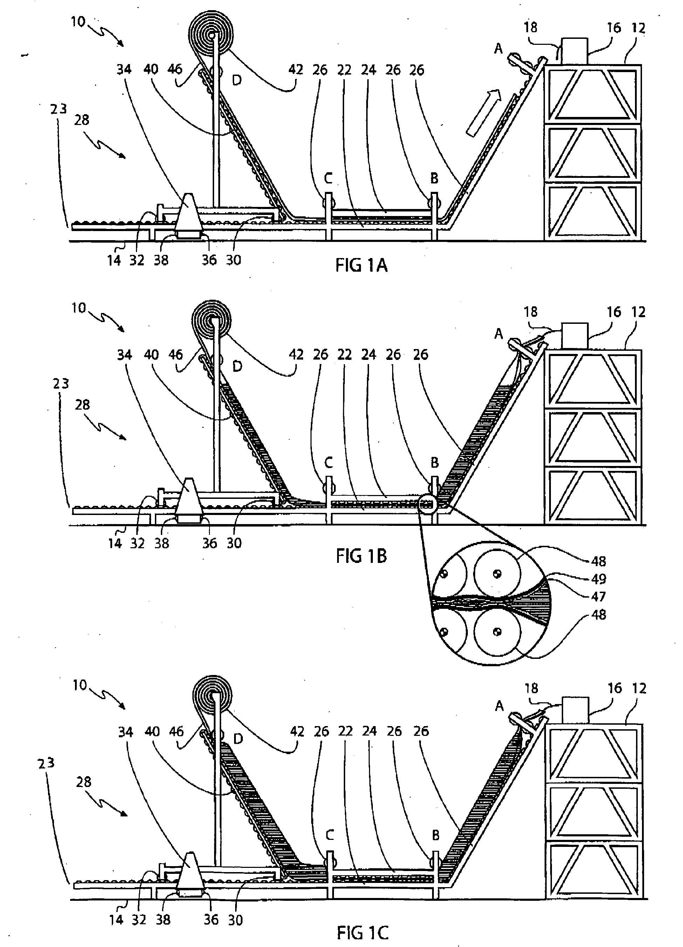

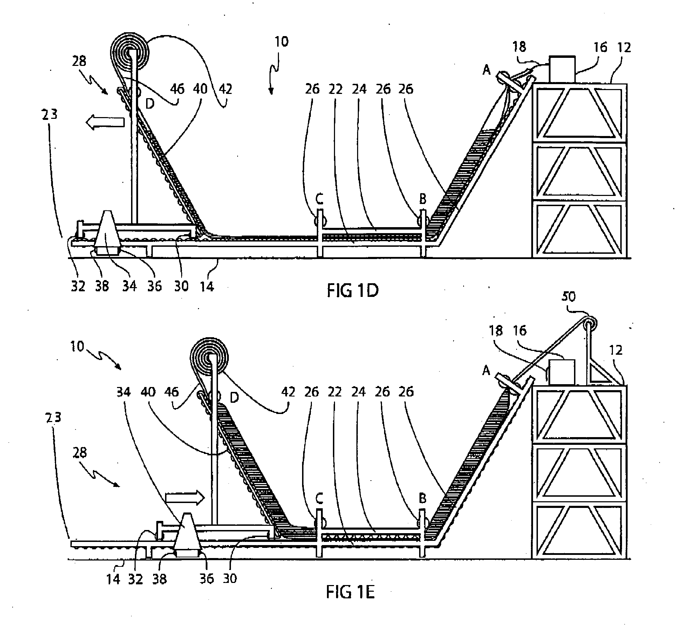

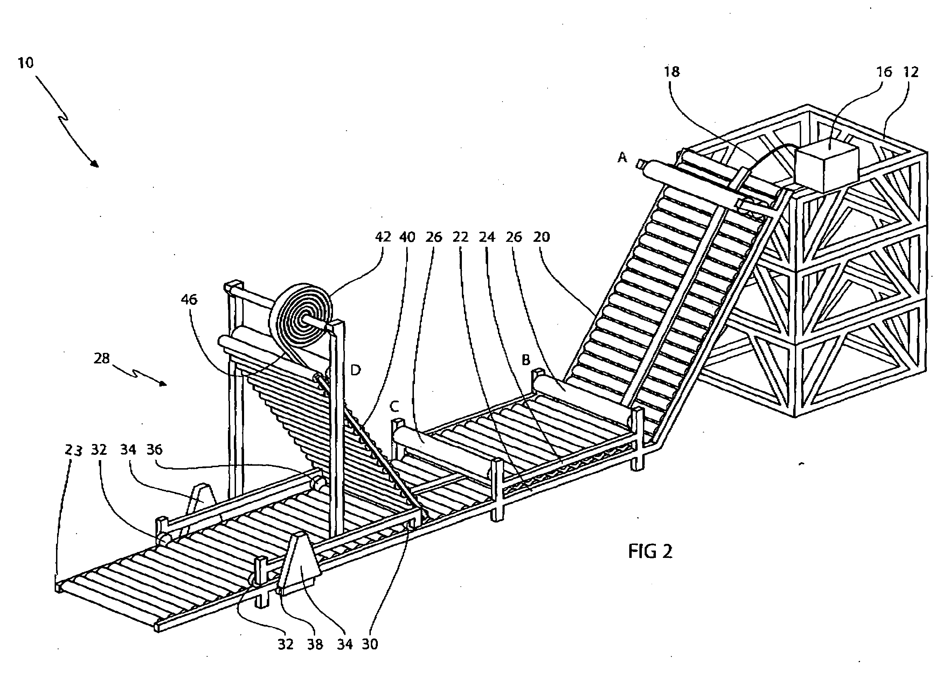

The invention will now be further described with reference to the figures, where Fig. 1 shows a first and currently preferred embodiment of a resin column impregnation plant, and Fig. 2 shows a perspective view of the impregnation plant of Fig. 1.

A detailed description of the figures of a specific embodiment according to the present invention follows below:
Fig. 1A shows a side view of an impregnation plant 10 according to the present invention. The impregnation plant comprises a steel framework tower 12 rising about 4 m above the floor 14. A resin supply station 16 is located on top of the framework tower 12. The resin supply station 16 comprises an extendible resin hose 18. The resin supply station 16 is connected to a resin tank (not shown) for supplying resin to the resin supply hose 18. The resin supply station 16 further includes a pump (not shown) and a control system (not shown) for controlling the supply of resin through the resin supply hose 18.
   A sloped conveyor 20 extends from the top of the framework tower 12 in a pivoted orientation towards the floor 14. The sloped conveyor 20 comprises a plurality of rollers for achieving a substantially even conveying surface. The sloped conveyor 20 is oriented to achieve a conveying direction indicated in Fig. 1A by an arrow. The bottom end of the sloped conveyor 20 facing the floor 14 has an attached bottom conveyor 22 extending from the bottom end of the sloped conveyor 20 in a direction away from the framework tower 12. The length of the bottom conveyor 22 may vary, but the preferred length is at least 10 m. A top conveyor 24 is located at a specific distance above the bottom conveyor 22 and extends from the bottom part of the sloped conveyor 20 along the direction of the bottom conveyor 22 for approx. 2 m. The height of the top conveyor 24 is adjustable for changing the specific distance between the bottom conveyor 22 and the top conveyor 24. The specific distance between the bottom conveyor 22 and the top conveyor 24 may be changed by operating the wheels 26.
   A trolley 28 is positioned on top of the bottom conveyor 22 and movable along the part of the bottom conveyor 22, which is not covered by the top conveyor 24. The trolley 28 comprises a pair of front wheels 30 and a pair of rear wheels 32. The bottom conveyor 22 comprises a side support frame 23 for accommodating the pair of front wheels 30 and the pair of rear wheels 32. The pair of front wheels 30 and the pair of rear wheels 32 is positioned on the side support frame 23 of the bottom conveyor 22. The trolley 28 is driven by an electrical motor 34, which in turn acts on a pair of front tooth wheels 36 and a pair of rear tooth wheels 38. The front and rear tooth wheels 36, 38 are located opposite the front wheels 30 and the rear wheels 32 so that they contact the downward facing side of the bottom conveyor 22. In this way the trolley 28 is securely fixated on the bottom conveyor 22. The downward facing end of the side support frame 23 of the bottom conveyor 22 preferably has a toothing corresponding to the front and rear tooth wheels 36, 38.
   The trolley 28 further comprises a movable conveyor 40, which is extending from the bottom conveyor 22 approx. 4 m upwards. The movable conveyor 40 is fixated to the trolley 28 and thereby movable in relation to the bottom conveyor 22 and the sloped conveyor 20. A liner storage 42 constituting a roll of unimpregnated liner 46 is positioned on top of the movable conveyor 40.
   The liner 46 may be conveyed in the conveying direction from the liner storage 42 through the constrictions D, C, B and A as indicated by the arrow in Fig. 1A. The wheels 26 are then adjusted such that the top conveyor 24 and the bottom conveyor 22 are positioned a specific distance apart such that the liner 46 is kept in a substantially flat position while still not acting with any considerable force against the liner. This is to avoid any substantial damage to the fibres located within the liner 46.
   The liner 46 is of a type having a fluid-impermeable outer layer made of a polymer material such as plastic and a fibrous inner layer suitable for being impregnated with a resin and e.g. being of a felt material.
   The constrictions A, B, C and D should be adjusted to mainly ensure the flat position of the liner 46 and only apply a minimum pressure on the liner 46.
Fig. 1B shows the impregnation plant 10 according to the present invention as shown in Fig. 1A having a liner 46 partially filled with resin. The resin is indicated in the figure by hatching. The resin is filled from the supply hose 18 into the open end of the liner 46. The resin supply hose 18 may be extended into the liner 46 through the constriction A and to the constriction B. By supplying resin at the constriction B instead of at the constriction A it can be ensured that the distance between the constriction B and the constriction A is completely filled with resin. The resin will fill the interior of the liner 46 between the constriction B and the constriction A. The fluid pressure caused by the resin column inside the liner 46 will cause the liner to assume a tubular shape between the constriction B and the constriction A. Due to the resin pressure at the constriction B the resin will propagate inside the liner towards the constriction C and further towards constriction D. Fig. 1B includes a close-up view of the first pair of rollers 48 of the top conveyor 24 and the bottom conveyor 22. It is shown that the bottom conveyor 22 and the top conveyor 24 cause the liner to assume a flat shape. The close-up further includes in more detail the resin (indicated by hatching), the fibre layer 47 of the liner 46, and the fluid tight outer layer 49 of the liner 46.
   The propagation of the resin through the liner 46 as well as the high resin pressure will cause the air and any remaining gas bubbles located within the fibre layer of the liner 46 to escape at constrictions B and C. The liner is thus degassed between position B and position C.
Fig. 1C shows the impregnation plant 10 according to the present invention, when the liner 46 has been completely filled with resin. When a steady state position has been achieved, the resin level at the constrictions A and D should be approx. the same. This position may be maintained for an extended time period until the liner 46 is completely degassed between constrictions B and C.
Fig. 1D shows the impregnation plant 10 while the trolley 28 is moved in a direction away from the framework tower 12 as indicated in Fig. 1D by the arrow. As the trolley 28 is being moved, additional liner 46 is supplied from the liner storage 42 and additional resin is supplied from the resin supply hose 18 to maintain the resin level. The resin will propagate into the unimpregnated parts of the liner and be degassed at constriction C. The velocity of the trolley 28 is limited to the propagation velocity of the resin. However, preferably the trolley 28 is moved slower to ensure a sufficient degassing of the liner 46.
Fig. 1E shows the impregnation plant 10 according the present invention while the liner 46 is being rolled up for transportation to the installation site. When a sufficient length of liner 46 has been impregnated, the trolley 28 may be moved in a direction towards the framework tower 12 as indicated by an arrow in Fig. 2E. The impregnated liner 46 may be rolled up on a transportation roll 50 or alternatively packaged in any other suitable way. The finished liner may be transported immediately to an installation site, or optionally the liner 46 may be subjected to pre-curing. The pre-curing will allow the liner 46 to assume a solid, but still flexible state. As the finished liner 46 is being rolled up on the transportation roll 50, the constriction A will prevent any residual resin from leaving the impregnation plant 10. Residual resin is any amount of resin not being contained within the inner fibre layer of the liner 46. When a suitable amount of liner 46 has been rolled up on the transportation roll 50, the liner 46 may be cut, the transportation roll 50 removed and the impregnation process may be restarted according to Fig. 1B. The impregnation plant 10 will allow the production of any length of liner, including an imaginary endless liner.
Fig. 2 shows a perspective view of the impregnation plant 10 according to the present invention. The width of the impregnation plant 10 makes it suitable for various sizes of liner.
   Any directional wording in the description, such as downstream, upstream, upwards, downwards, sideward, etc. should be understood in relation to the figures. Although the present invention has been described above with reference to specific embodiments, it is contemplated that numerous modifications may be deduced by a person having ordinary skill in the art. For instance, some or all of the conveyors may be fitted with vibration devices for vibrating the conveyor and allowing more gas bubbles to escape. Also, the trolley 28 may be controlled by a sensor so that the trolley 28 moves automatically when the steady state position is achieved, or after a certain time period after the steady state has been achieved.

## Claims

1. A method of impregnating a tubular liner with a resin, said liner having a fibrous inner layer and a fluid-impermeable outer layer, said method comprising:
providing a conveyor system comprising a first conveyor monotonously descending from a first position to a second position downstream and below said first position, a second conveyor extending from said second position to a third position downstream and substantially level with said second position, and a third conveyor monotonously ascending from said third position to a fourth position downstream and substantially level with said first position, said conveyor system defining a conveying path defining a conveying direction from said fourth position via said third and second positions to said first position,
providing one or more constrictions located along said conveying path for allowing said liner to assume a flat configuration in which said fibrous inner layer of said liner is contacting an opposite part of said fibrous inner layer of said liner,
providing a resin injector located at said first position,
positioning said liner on said conveyor system extending through said conveying path and said constriction, said liner defining a supply zone extending inside said liner between said first position and said constriction and an impregnation zone extending inside said liner between said constriction and said fourth position,
filling said supply zone with resin by using said resin injector and allowing said resin to advance in said impregnation zone in a direction opposite said conveying direction and allowing said resin to reach a steady state position at said fourth position for subjecting said liner to an elevated impregnation pressure between said second and third positions caused by the height difference between positions 1 and 2 and positions 3 and 4, and
conveying said liner in said conveying direction.

2. The method according to claim 1, wherein said constriction comprises a bend or alternatively a pair of oppositely facing rollers or yet alternatively a pair of oppositely facing conveyors.

3. The method according to any of the preceding claims, wherein said constriction is located at said first position and/or at said second position and/or at said third position and/or at said fourth position.

4. The method according to any of the preceding claims, wherein said constriction comprises a plurality of constrictions along said conveying path for causing said liner to assume a flat configuration along said conveying path.

5. The method according to any of the preceding claims, wherein said second conveyor is tilted in relation to the horizontal plane.

6. The method according to any of the preceding claims, wherein said third conveyor comprises a trolley for varying the distance between said second and third position.

7. The method according to claim 6, wherein said trolley comprises a sensor for automatically controlling said trolley.

8. The method according to any of the preceding claims, wherein said first conveyor and/or said second conveyor and/or said third conveyor comprise a vibration device for allowing gas bubbles to escape.

9. The method according to any of the preceding claims, wherein said resin injector is extendable Into said liner in a direction from said first position to said second position.

10. The method according to any of the preceding claims, wherein said conveyer system comprises a liner supply for supplying additional liner at said fourth position or alternatively at said first position.

11. The method according to any of the preceding claims, wherein said first and fourth position, respectively, are located 1-15 m above said second and third position, respectively, preferably 2-8 m, more preferably 3-6 m and most preferably 4 m, or alternatively 2-4 m, or yet alternatively 4-6 m.

12. The method according to any of the preceding claims, wherein said second conveyer is extending 1-300 m, preferably 10-60 m and more preferably 30 m, or alternatively 10-20 m, 20-30 m, 30-40 m, 40-50 m or 50-60 m.

13. The method according to any of the preceding claims, wherein said constriction is adjustable for allowing different liner sizes.

14. The method according to any of the preceding claims, wherein said third conveyer is placed on top of said second conveyor.

15. The method according to any of the preceding claims, wherein the resin level in said supply zone is monitored by IR.

16. An impregnation plant for impregnating a tubular liner with a resin, said liner having a fibrous inner layer and a fluid-impermeable outer layer, said impregnation plant comprising:
a conveyor system comprising a first conveyor monotonously descending from a first position to a second position downstream and below said first position, a second conveyor extending from said second position to a third position downstream and substantially level with said second position, and a third conveyor monotonously ascending from said third position to a fourth position downstream and substantially level with said first position, said conveyor system defining a conveying path defining a conveying direction from said fourth position via said third and second positions to said first position for positioning said liner on said conveyor system between said first position and said fourth position and extending through said constriction and conveying said liner in said conveying direction, said liner defining a supply zone extending inside said liner between said first position and said constriction, and an impregnation zone extending inside said liner between said constriction and said fourth position,
one or more constrictions located along said conveying path for allowing said liner to assume a flat configuration in which said fibrous inner layer of said liner is contacting an opposite part of said fibrous inner layer of said liner, and
a resin injector located at said first position for filling said supply zone with resin by using said resin injector and allowing said resin to advance in said impregnation zone in a direction opposite said conveying direction and allowing said resin to reach a steady state position at said fourth position for subjecting said liner to an elevated impregnation pressure between said second and third position caused by the height difference between the first and second position and between the third and fourth position.

17. The impregnation plant according to claim 16, further comprising any of the features of claims 1-15.
